# EUROPÄISCHE PATENTSCHRIFT

(11) **EP 0 706 246 B1**
(45) Veröffentlichungstag und Bekanntmachung des Hinweises auf die Patenterteilung: **22.07.1998**
(21) Anmeldenummer: 95114615.8
(22) Anmeldetag: 18.09.1995
(51) Int. Cl.: H02B 1/015, B66B 1/46, H01H 21/02

(54) **Dem Benutzer zugeneigtes Tableau für Aufzüge**
Lift control panel oriented towards the user
Panneau de commande pour ascenseur orienté vers l'utilisateur

(30) Priorität: 05.10.1994 CH 2997/94
(43) Veröffentlichungstag der Anmeldung: 10.04.1996
(73) Patentinhaber: INVENTIO AG, CH-6052 Hergiswil NW (CH)
(72) Erfinder: Luzi, Hansjürg, CH-8914 Aeugst a. Albis (CH); Nyffenegger, Werner, CH-6043 Adligenswil (CH); Muff, Josef, CH-6030 Ebikon (CH)

(56) Entgegenhaltungen:
- FR-A- 2 311 366
- US-A- 4 073 563
- US-A- 5 279 487

## Beschreibung

Die Erfindung betrifft ein dem Benutzer zugeneigtes Tableau mit in einem Gehäuse angeordneten Befehls- und/oder Meldegeräten, die dem Benutzer eines Aufzuges als Mittel zur Eingabe von Befehlen und/oder als Mittel zur Information dienen.

Aus der Patentschrift US 4 365 691 ist ein Tableau mit Schaltern für Aufzüge bekannt geworden, das gegenüber der Vertikalen um einen bestimmten Winkel nach oben geneigt ist. Dadurch wird die Betätigung der Schalter für kleine und für grosse Aufzugsbenutzer erleichtert und die Sicht auf das Tableau verbessert. Die Schalter sind zeilen- und spaltenweise auf einer Deckplatte eines im vertikalen Schnitt dreieckförmigen Gehäuses angeordnet.

Ein Nachteil der bekannten Einrichtung liegt darin, dass die dichte Anordnung der Schalter besonders im Personengedränge zu fehlerhafter Bedienung führen kann. Nachteilig ist auch, dass Änderungen des Tableaus, beispielsweise durch eine Modernisierung der Aufzugsanlage bedingte Änderung der Anzahl und Anordnung der Schalter, nur mit grossem Aufwand möglich sind.

Hier will die Erfindung Abhilfe schaffen. Die Erfindung, wie sie in den Ansprüchen gekennzeichnet ist, löst die Aufgabe, die Nachteile der bekannten Einrichtung zu vermeiden und ein Tableau vorzuschlagen das leicht zu bedienen ist und das für unterschiedliche Anwendungen einsetzbar ist.

Die durch die Erfindung erreichten Vorteile sind im wesentlichen darin zu sehen, dass mit für Befehls- und Meldegeräte gleichen Komponenten übersichtliche und einfach zu bedienende Tableaus in geneigter Bauweise herstellbar sind. Für Befehls- und Meldegeräte einheitliche Komponenten wirken sich vorteilhaft auf die Produktionskosten und Lagerhaltung aus. Zudem erlaubt die Modulbauweise mit wenigen unterschiedlichen Komponenten den mannigfaltigen Kundenwünschen gerecht zu werden.

Im folgenden wird die Erfindung anhand von lediglich einen Ausführungsweg darstellenden Zeichnungen näher erläutert. Es zeigen:
- Fig. 1: eine Explosionszeichnung eines erfindungsgemässen Tableaus mit Schaltern,
- Fig. 2: eine Zusammenbauzeichnung des Tableaus gemäss Fig. 1 mit einem Tastenelement,
- Fig. 3: eine Zusammenbauzeichnung des Tableaus gemäss Fig. 1 mit einem Trägerelement,
- Fig. 4: eine Draufsicht des Tastenelementes,
- Fig. 5: eine Seitenansicht des Tastenelementes,
- Fig. 6: eine Untersicht des Tastenelementes,
- Fig. 7: eine Untersicht eines auf das Tastenelement oder auf das Trägerelement aufsetzbaren Adressträgers,
- Fig. 8: eine Ansicht von der Breitseite des Adressträgers,
- Fig. 9: eine Draufsicht des Adressträgers,
- Fig. 10: eine Ansicht von der Schmalseite des Adressträgers,
- Fig. 11: eine erste Seitenansicht eines Schaltprintträgers,
- Fig. 12: eine Draufsicht des Schaltprintträgers,
- Fig. 13: eine zweite Seitenansicht des Schaltprintträgers,
- Fig. 14: eine Draufsicht eines Federelementes,
- Fig. 15: einen Schnitt entlang der Linie A-A der Fig. 14 des Federelementes,
- Fig. 16: eine Entriegelungseinrichtung zur Entriegelung des Adressträgers,
- Fig. 17: eine Frontansicht eines Riegels der Entriegelungseinrichtung gemäss Fig. 16,
- Fig. 18: eine Seitenansicht des Riegels gemäss Fig. 17,
- Fig. 19, 20, und 21: eine Ausführungsvariante einer Einrichtung zur Befestigung eines Diodenprints am Tastenelement,
- Fig. 22: eine Ausführungsvariante eines Tableaus mit einem Rahmen als Gehäuseprofil,
- Fig. 23: eine Draufsicht eines auf das Tableau gemäss Fig. 22 passenden Tastenelementes,
- Fig. 24: eine Seitenansicht des Tastenelementes gemäss Fig. 23 und
- Fig. 25: eine Untersicht des Tastenelementes gemäss Fig. 22.

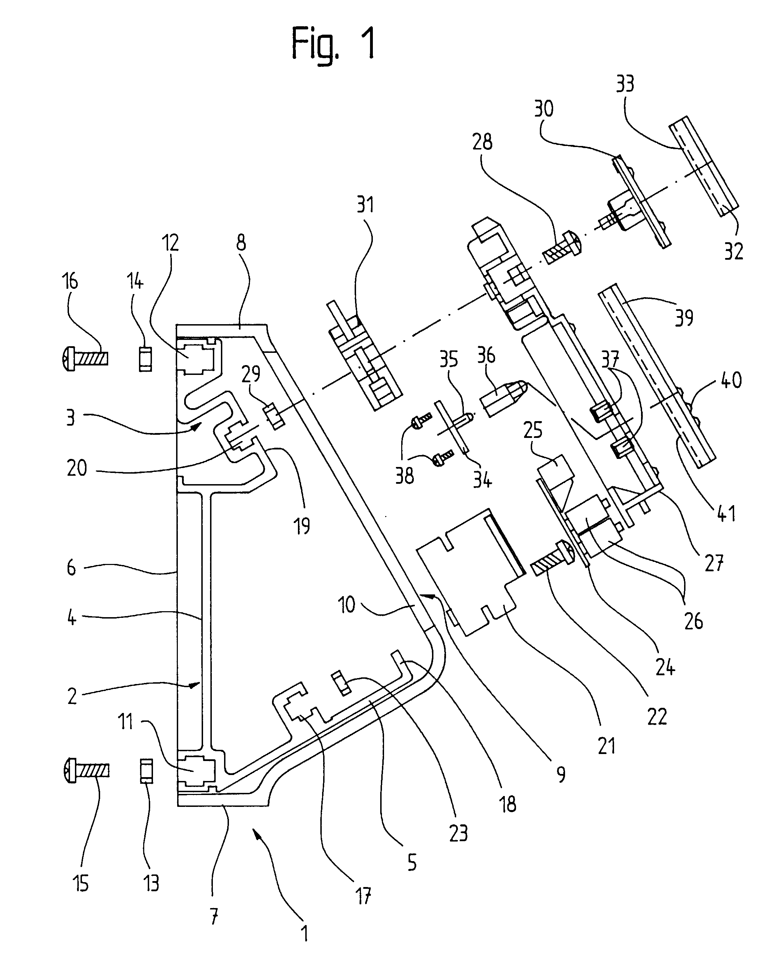

In den Fig. 1 bis 15 ist mit 1 ein Gehäuse bezeichnet, in dem ein Gehäuseprofil 2 mit einem Profilkopf 3, einem Profilrücken 4 und einem Profilfuss 5 angeordnet ist. Das Gehäuse 1 besteht aus einer Gehäuserückseite 6, einer ersten Gehäusedeckseite 7, einer zweiten Gehäusedeckseite 8 und einer dem Benutzer zugeneigten Gehäusefrontseite 9 mit einer ersten Öffnung 10. Profilrücken 4 und Gehäuserückseite 6 sind geradflächig, damit diese an einer Wand oder an einem Wandelement angeordnet werden können. Weil die erste Gehäusedeckseite 7 und die zweite Gehäusedeckseite 8 geradflächig sind, können mehrere Gehäuse 1 bündig übereinander angeordnet werden. Am einen Ende des Profilrückens 4 ist eine erste Nut 11 und am anderen Ende des Profilrückens 4 ist eine zweite Nut 12 vorgesehen, die eine erste Mutter 13, bzw. eine zweite Mutter 14 aufnehmen. Das Gehäuseprofil 2 wird mittels einer ersten Schraube 15, bzw. einer zweiten Schraube 16 und den in die Nuten 11, 12 eingelegten Muttern 13, 14 mit dem Wandelement verbunden. Nicht dargestellt sind am Profilrücken 4 angeordnete Drehverschlüsse, die in an den Seitenwänden des Gehäuses 1 angeordnete Ausnehmungen eingreifen und somit das Gehäuse 1 mit dem Gehäuseprofil 2 lösbar verbinden. Der mit dem Profilrücken 4 einen spitzen Winkel bildende Profilfuss 5 weist etwa in der Mitte eine dritte Nut 17 auf und endet gehäusefrontseitig mit einem Schenkel 18, der parallel zur Gehäusefrontseite 9 verläuft. Der Profilkopf 3 bildet eine parallel zur Gehäusefrontseite 9 verlaufende erste Fläche 19 mit einer mittig in der Fläche 19 angeordneten vierten Nut 20. Gehäuse 1 und Gehäuseprofil 2 können auch flach ausgebildet sein, sodass die Gehäusefrontseite 9 parallel zur Gehäuserückseite 6 verläuft.

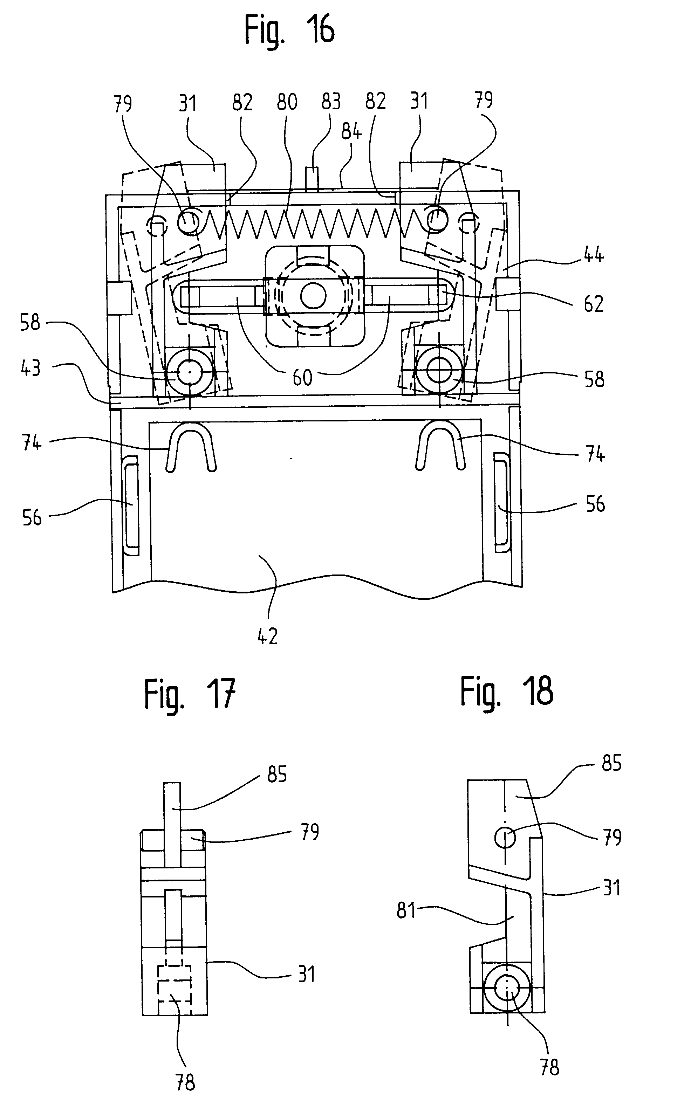

Ein Schaltprintträger 21 ist mittels einer dritten Schraube 22 und einer in die dritte Nut 17 eingelegten dritte Mutter 23 am Profilfuss 5 befestigt. Am Schaltprintträger 21 ist ein Schaltprint 24 mit einem Verbindungsstecker 25 und mindestens einem Mikroschalter 26 angeordnet. Der Mikroschalter 26 ist mittels eines Tastenelementes 27 betätigbar, das am der Betätigungsseite gegenüberliegenden Ende mittels einer vierten Schraube 28 und einer in die vierte Nut 20 eingelegten Mutter 29 am Profilkopf 3 befestigt ist. Benutzerseitig ist ein Adressträger 30 in das Tastenelement 27 eingesteckt, der auf der Rückseite des Tastenelementes 27 je Hälfte mit einem Riegel 31 verrastet. Einzelheiten dazu sind aus Fig. 16 bis 18 ersichtlich. Eine mit einem Schriftzug versehene erste Deckplatte 32 ist entlang fünften den Adressträger 30 teilweise hintergreifenden Nuten 33 auf den Adressträger 30 aufschiebbar. Betätigungsseitig ist als Quittungselement ein Diodenprint 34 mit mindestens einer Leuchtdiode 35 und einer Diodenhaube 36 vorgesehen, wobei der Diodenprint 34 mittels fünften in Gewindebolzen 37 des Tastenelementes 27 eingreifenden Schrauben 38 rückseitig am Tastenelement 27 befestigt ist. Dabei durchdringt die Diodenhaube 36 das Tastenelement 27 und eine zweite Deckplatte 39, sodass die von der Leuchtdiode 35 ausgehende Quittungsmeldung für den Benutzer sichtbar wird. An der Deckplatte 39 angeordnete Noppen 40 weisen den Benutzer auf die zu betätigende Stelle des Tastenelementes 27 hin und gewährleisten eine rutschfreie Betätigung des Tastenelementes 27. Die zweite Deckplatte 39 ist entlang sechsten das Tastenelement 27 teilweise hintergreifenden Nuten 41 auf das Tastenelement 27 aufschiebbar. Anstelle der Deckplatte 39 kann auch ein Schriftträger auf das Tastenelement 27 aufgeschoben werden. Je nach Gehäusebreite können auch mehrere Tastenelemente 27 im gleichen Gehäuse 1 nebeneinander angeordnet werden. Das einstückige Gehäuseprofil 2 wird auf die Gehäusebreite zugeschnitten.

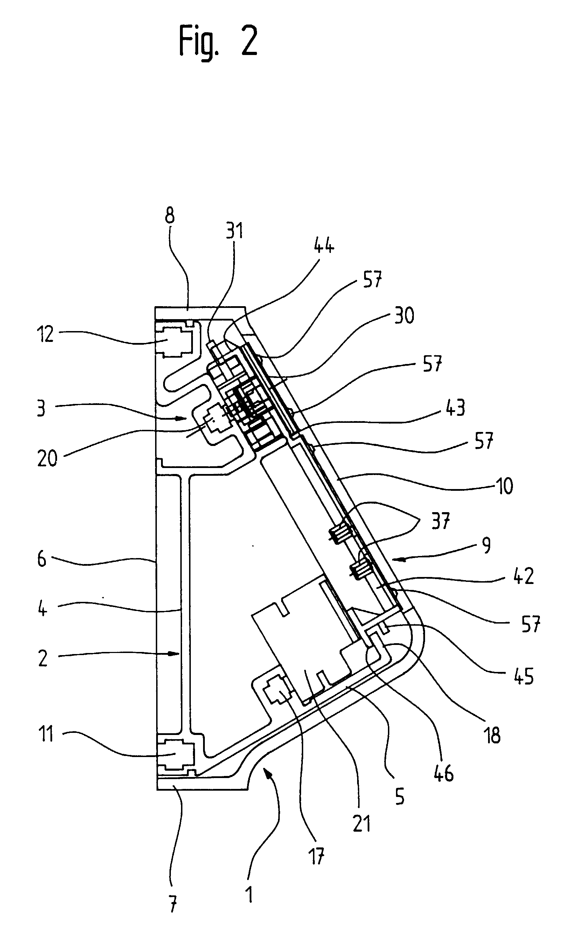

Fig. 2 zeigt das Tableau gemäss Fig. 1 in zusammengebauter Form. Beim Betätigen des einstückigen Tastenelementes 27 dreht sich ein Schalterteil 42 um einen Gelenksteg 43, auch Filmscharnier genannt, der den beweglichen Schalterteil 42 mit einem auf der ersten Fläche 19 aufliegenden festen Adressteil 44 verbindet. Die Auslenkung des Schalterteils 42 wird durch 10 den Abstand zwischen einem stirnseitig am Schalterteil 42 angeordneten Elementfuss 45 und einem stirnseitig am Schalterteil 42 angeordneten Anschlag 46 bestimmt, wobei der Elementfuss 45 auf der einen Seite des Schenkels 18 und der Anschlag 46 auf der anderen Seite des Schenkels 18 des Profilfusses 5 liegt. Die beim Betätigen des Tastenelementes 27 auf den Schalterteil 42 ausgeübte Kraft wird vom Elementfuss 45 auf den Schenkel 18 übertragen. Nach dem Betätigen des Tastenelementes 27 drückt der Mikroschalter 26 den Schalterteil 42 nach aussen bis der Anschlag 46 am Schenkel 18 ansteht.

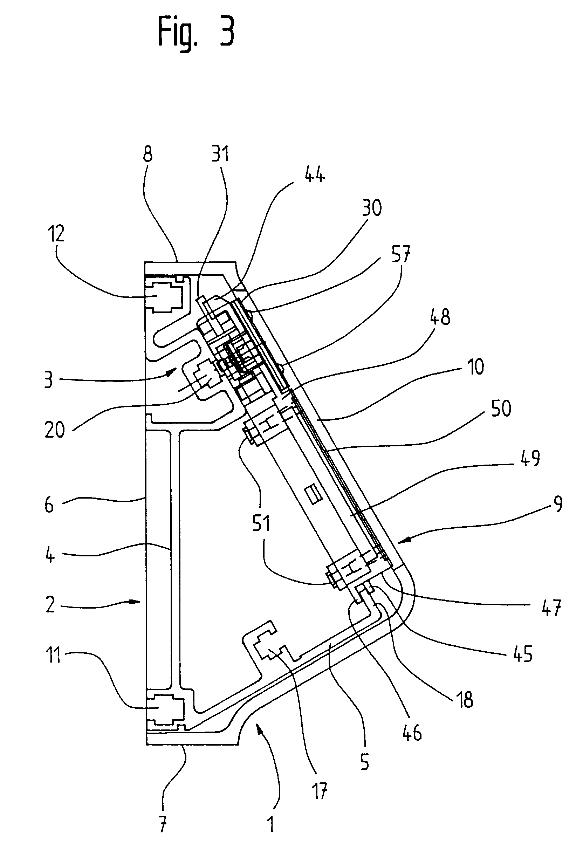

Fig. 3 zeigt eine Ausführungsvariante des Tableaus gemäss Fig. 1 in zusammengebauter Form. Bei dieser Ausführungsvariante ist anstelle des einstückigen Tastenelementes 27 ein einstückiges Trägerelement 47 vorgesehen für beispielsweise Lautsprecher, Anzeigegeräte, Bildschirme oder Schriftträger. Das Trägerelement 47 besteht aus dem Adressteil 44, der identisch ist mit dem Adressteil 44 des Tastenelementes 27, und einem Elementteil 48, auf dem die oben genannten Geräte angeordnet werden. Adressteil 44 und Elementteil 48 sind fest miteinander verbunden. Der Adressteil 44 wird wie beim Tastenelement 27 am Profilkopf 3 befestigt. Der Abstand zwischen dem stirnseitig am Elementteil 48 angeordneten Elementfuss 45 und dem stirnseitig am Elementteil 48 angeordneten Anschlag 46 ist gleich der Dicke des Schenkels 18, sodass das Trägerelement 47 auf den Schenkel 18 des Profilfusses 5 aufschiebbar ist. Elementfuss 45, Anschlag 46 und Schenkel 18 bilden einen festen Sitz. Der Elementteil 48 besteht im wesentlichen aus einem mit dem Adressteil 44 fest verbundenen ersten Rahmen 49, an dem stirnseitig Elementfuss 45 und Anschlag 46 angeordnet sind. Benutzerseitig ist eine die oben genannten Geräte tragende Elementplatte 50 in den ersten Rahmen 49 eingelegt, die von der Rückseite mittels sechsten Schrauben 51 gehalten wird. Nicht dargestellt sind am ersten Rahmen 49 angeordnete Laschen, die falls eine Deckplatte aufgeschoben wird, von Nuten der Deckplatte hintergriffen werden. Nicht dargestellt sind Federelemente, die die Deckplatte halten. Je nach Gehäusebreite können auch mehrere Trägerelemente 47 im gleichen Gehäuse 1 nebeneinander angeordnet werden. Das einstückige Gehäuseprofil 2 wird auf die Gehäusebreite zugeschnitten.

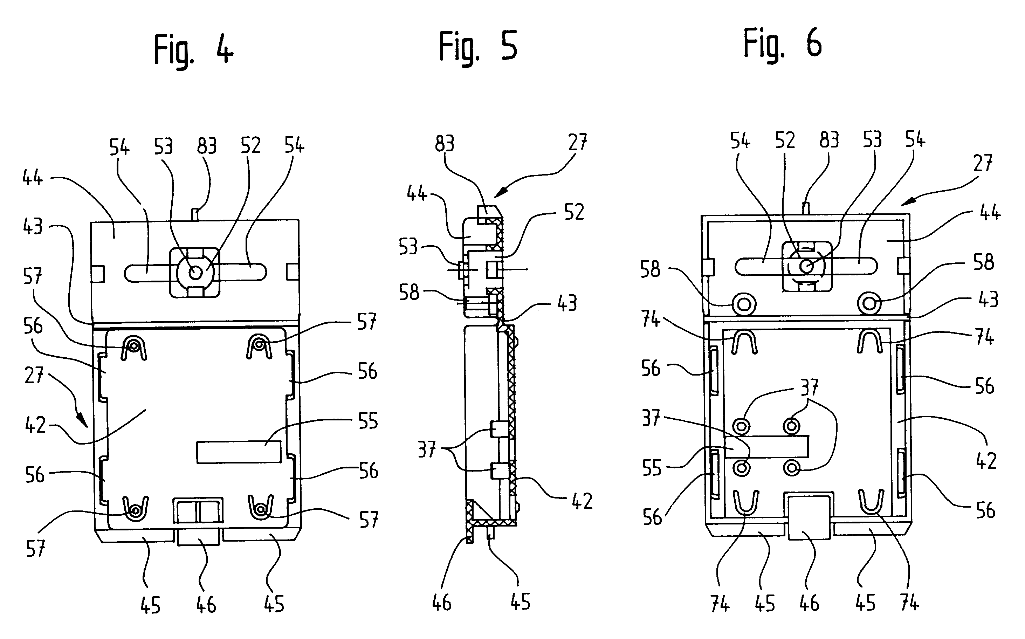

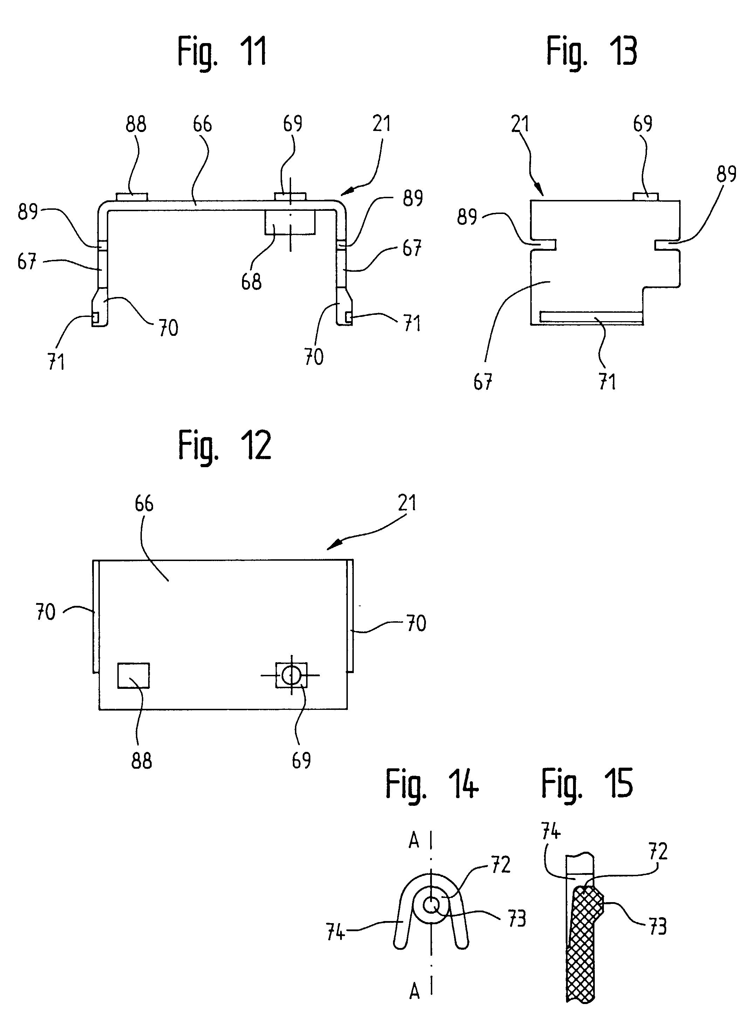

In den Fig. 4 bis 6 sind Einzelheiten des Tastenelementes 27 dargestellt. Der Adressteil 44 weist mittig eine erste Vertiefung 52 auf mit einer profilseitigen ersten Bohrung 53 für die vierte Schraube 28. An die erste Vertiefung 52 anschliessend sind in der Querachse verlaufende zweite Öffnungen 54 vorgesehen. Profilseitig sind am Adressteil 44 Stehbolzen 58 angeordnet, die als Drehachse für je einen Riegel 31 dienen. Einzelheiten dazu sind aus den Fig. 16 bis 18 ersichtlich. Eine zwischen den Gewindebolzen 37 des Schalterteils 42 verlaufende dritte Öffnung ist mit 55 bezeichnet, durch die die Diodenhaube 36 tritt. An den Rändern des Schalterteils 42 sind Laschen 56 vorgesehen, die von den sechsten Nuten 41 der zweiten Deckplatte 39 hintergriffen werden. Die aufgeschobene zweite Deckplatte 39 wird von in jeder Ecke des Schalterteils 42 angeordneten Federelementen 57 gehalten. Einzelheiten dazu sind aus Fig. 14 und 15 ersichtlich.

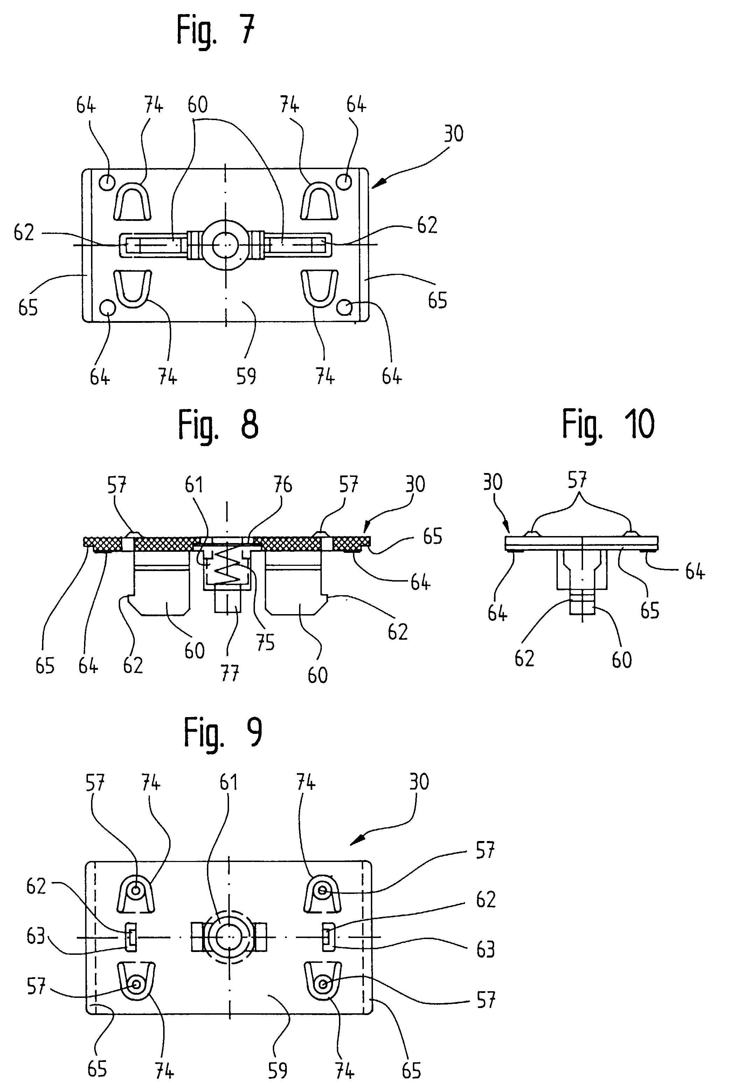

In den Fig. 7 bis 10 sind Einzelheiten des Adressträgers 30 dargestellt, der im wesentlichen aus einem Trägerkörper 59 und zwei Schenkeln 60 besteht. Mittig am Trägerkörper 59 ist eine zweite Vertiefung 61 vorgesehen, die in die erste Vertiefung 52 des Adressteils 44 passt. In der zweiten Vertiefung 61 ist eine Druckfeder 75 angeordnet, die einenends an einem Anschlagblech 76 ansteht und anderenends einen Bolzen 77 mit einer Kraft beaufschlagt. In der Einbaulage drückt der Bolzen 77 auf die vierte Schraube 28. Bei der in den Fig. 16 bis 18 näher erläuterten Entriegelung wird der Adressträger 30 durch die Federkraft aus dem Gehäuse 1 gestossen. An die zweite Vertiefung 61 anschliessend sind die in der Querachse verlaufenden Schenkel 60 vorgesehen. Die Schenkel 60 durchdringen die zweiten Öffnungen 54 des Adressteils 44 und verrasten mit ihren Rastnasen 62 an den profilseitigen Riegeln 31. Die Rastnasen 62 sind durch dritte Öffnungen 63 in ihrer Raststellung sichtbar. Je Ecke des Trägerkörpers 59 ist ein Fuss 64 für den Spielausgleich mit dem Adressteil 44 vorgesehen. An den Schmalseiten des Trägerkörpers 59 sind siebte Nuten 65 eingeschnitten, die von den fünften Nuten 33 der ersten Deckplatte 32 hintergriffen werden. Die aufgeschobene erste Deckplatte 32 wird von in jeder Ecke des Trägerkörpers 59 angeordneten Federelementen 57 gehalten. Einzelheiten dazu sind aus Fig. 14 und 15 ersichtlich.

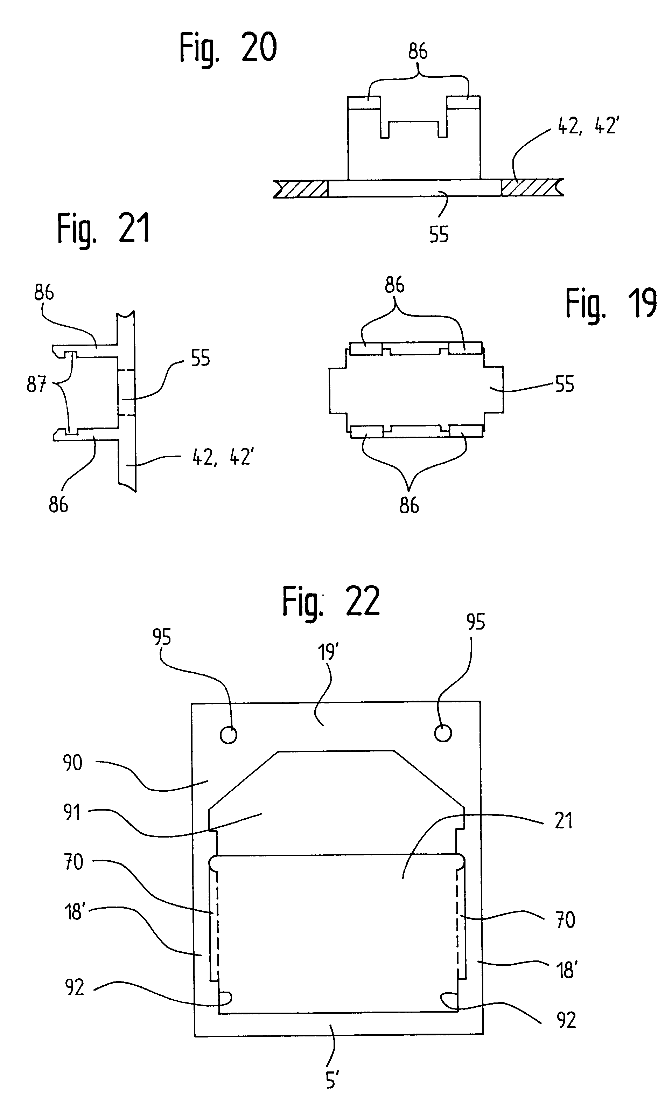

In den Fig. 11 bis 13 sind Einzelheiten des Schaltprintträgers 21 dargestellt, der im wesentlichen aus einem Befestigungsteil 66 und Seitenwänden 67 besteht. Der Befestigungsteil 66 weist eine zweite Bohrung 68 mit einer profilseitigen ersten Nocke 69 auf, durch die die dritte Schraube 22 den Schaltprintträger 21 mit der dritten Nut 17 des Profilfusses 5 verbindet. Eine zweite Nocke 88 greift in die dritte Nut 17 ein und sichert den Schaltprintträger 21 gegen Drehkräfte. An den Seitenwänden 67 sind Einschnitte 89 angeordnet, in die je Ecke des Schaltprints 24 vorgesehene Nasen eingreifen. Zur Montage des Schaltprints 24 werden die Seitenwände 67 gespreizt und die Schaltprintnasen in die Einschnitte 89 eingeführt. Die Enden 70 der Seitenwände 67 sind verstärkt und weisen aussenliegende achte Nuten 71 auf, in die Kragen eines in Fig. 22 dargestellten Rahmens eines Tableaus eingreifen.

In den Fig. 14 und 15 sind Einzelheiten des Federelementes 57 dargestellt. Das Federelement 57 besteht aus einer Federzunge 72 und einer am Zungenende aufgesetzten Federnocke 73. Die Federzunge 72 entsteht durch eine U-förmige Ausnehmung 74.

In den Fig. 16 bis 18 ist eine Entriegelungseinrichtung zur Entriegelung des Adressträgers 30 dargestellt. Der Stehbolzen 58 des Adressteils 44 durchdringt eine vierte Bohrung 78 des Riegels 31. Der Riegel 31 ist somit schwenkbar am Adressteil 44 befestigt und mittels einer an einem Federbolzen 79 angreifenden Zugfeder 80 mit dem benachbarten Riegel 31 verbunden. Die Riegel 31 werden durch die Federkraft an ersten Riegelbegrenzern 82 gehalten. In der in Fig. 16 mit ausgezogener Linie dargestellten Raststellung der Riegel 31 verrasten die Schenkel 60 des Adressträgers 30 mit ihren Rastnasen 62 an Rastflächen 81. Zum Entriegeln der Rastnasen 62 wird ein mittels einer Zentriernase 83 geführtes Entriegelungsblech 84 zwischen das Gehäuse 1 und den Adressteil 44 geschoben. Das keilförmige Entriegelungsblech 84 greift dabei an Entriegelungslaschen 85 an und schwenkt die Riegel 31 entgegen der Federkraft nach aussen. Durch die Federkraft der Druckfeder 75 des Adressträgers 30 wird der Adressträger 30 aus dem Gehäuse 1 gestossen. Die Entriegelungsstellung ist in Fig. 16 mit unterbrochener Linie dargestellt.

Fig. 19 bis 21 zeigt eine Ausführungsvariante zur schraubenlosen Befestigung des Diodenprints 34 am Schalterteil 42, 42'. Anstelle der Gewindebolzen 37 treten Printhalter 86 mit neunten Nuten 87, in die der Diodenprint 34 werkzeuglos eingesetzt werden kann.

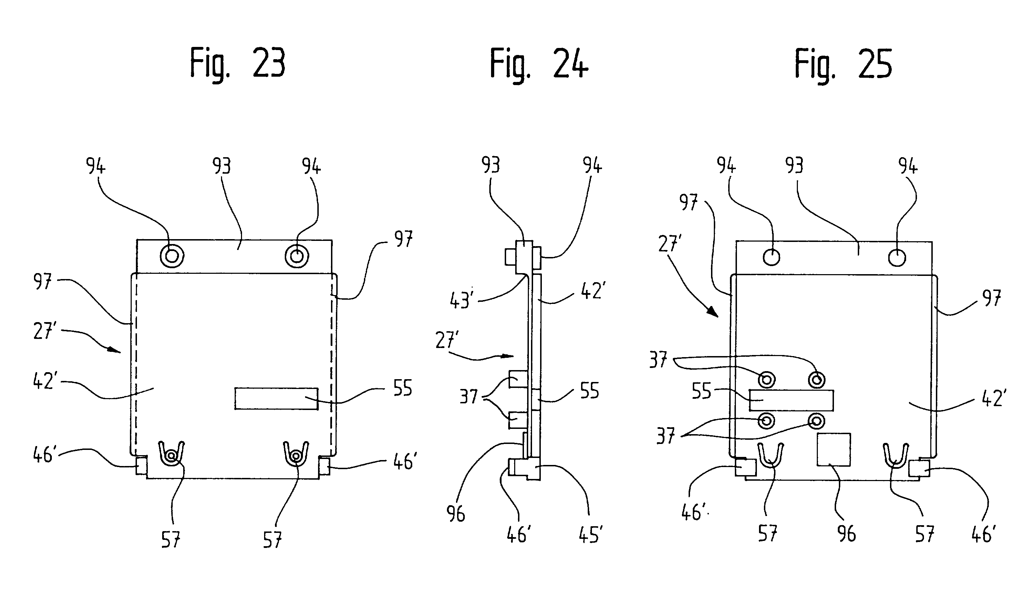

Fig 22 bis 25 zeigt eine Variante eines Tableaus mit einem Rahmen als Gehäuseprofil 2. Das Tableau weist einen Rahmen 90 mit einer mit Bohrungen 95 versehenen ersten Fläche 19' und mit einer Rahmenöffnung 91 auf, an der am Schenkel 18' des Profilfusses 5' ein Kragen 92 angeordnet ist. Der Schaltprintträger 21 gemäss Fig. 11 bis 13 wird in die Rahmenöffnung 91 eingesetzt, wobei der Kragen 92 in die achten Nuten 71 der verstärkten Enden 70 des Schaltprintträgers 21 eingreifen. Fig. 23 bis 25 zeigt eine Ausführungsvariante des Tastenelementes 27, das mittels einer Befestigungslasche 93 und sechste Bohrungen 94 durchdringende Schrauben an der ersten Fläche 19' des Rahmens 90 befestigt ist. Die Verbindung zwischen Befestigungslasche 93 und Schalterteil 42' wirkt als Gelenksteg 43'. Beim Betätigen des Schalterteils 42' drückt eine Schaltnocke 96 auf die Mikroschalter 26 des am Schaltprintträger 21 angeordneten Schaltprints 24. Die Auslenkung des Schalterteils 42' wird in der einen Richtung durch den Elementfuss 45' und in der anderen Richtung durch den Anschlag 46' begrenzt. In der einen Richtung steht der Elementfuss 45' und in der anderen Richtung der Anschlag 46' am Kragen 92 des Rahmens 90 an. Die Deckplatte 39 ist auf eine an den Seitenkanten des Schalterteils 42' angeordnete zehnte Nut 97 aufschiebbar.

## Patentansprüche

1. Dem Benutzer zugeneigtes Tableau mit in einem Gehäuse angeordneten Befehls- und/oder Meldegeräten, die dem Benutzer eines Aufzuges als Mittel zur Eingabe von Befehlen und/oder als Mittel zur Information dienen,
dadurch gekennzeichnet,
dass im Gehäuse (1) ein Gehäuseprofil (2) mit einem Profilkopf (3) und einem Profilfuss (5) angeordnet ist, wobei der Profilkopf (3) eine erste Fläche (19) aufweist und der Profilfuss (5) einen Schenkel (18) aufweist und
dass mindestens ein vom Gehäuseprofil (2) getragenes Element (27, 47) vorgesehen ist, das einenends mit dem Profilkopf (3) verbunden ist und anderenends vom Schenkel (18) des Profilfusses (5) gehalten wird.

2. Dem Benutzer zugeneigtes Tableau mit in einem Gehäuse angeordneten Befehls- und/oder Meldegeräten, die dein Benutzer eines Aufzuges als Mittel zur Eingabe von Befehlen und/oder als Mittel zur Information dienen,
dadurch gekennzeichnet,
dass das Tableau mindestens ein einenends an einer ersten Fläche (19, 19') eines Gehäuseprofils (2, 90) angeordnetes und anderenends vom Schenkel (18, 18') eines Profilfusses (5, 5') des Gehäuseprofils (2, 90) gehaltenes Element (27, 27') mit einem Gelenksteg (43, 43') aufweist, wobei beim Betätigen des Elementes (27, 27') die profilfussseitige Auslenkung des Elementes (27, 27') auf mindestens einen Mikroschalter (26) übertragen wird.

3. Tableau nach den Ansprüchen 1 oder 2,
dadurch gekennzeichnet,
dass das Element (27, 47) profilkopfseitig einen auf der ersten Fläche (19) aufliegenden Adressteil (44) aufweist und profilfussseitig einen Elementfuss (45) und einen Anschlag (46) aufweist, die den Schenkel (18) des Profilfusses (5) umschliessen.

4. Tableau nach Anspruch 3,
dadurch gekennzeichnet,
dass ein Adressträger (30) auf den Adressteil (44) aufsteckbar ist, wobei Schenkel (60) des Adressträgers (30) den Adressteil (44) durchdringen und mit rückseitig am Adressteil (44) angeordneten Riegeln (31) verrasten.

5. Tableau nach Anspruch 4,
dadurch gekennzeichnet,
dass die Riegel an Stehbolzen (58) drehbar angeordnet sind und mit einer Zugfeder (80) verbunden sind, wobei die Entriegelung der Schenkel (60) mittels eines zwischen Adressteil (44) und Gehäuse (1) einschiebbaren keilförmigen Entriegelungsblechs (84) erfolgt, wobei Entriegelungslaschen (85) die Riegel (31) nach aussen schwenken.

6. Tableau nach den Ansprüchen 4 und 5,
dadurch gekennzeichnet,
dass am Adressträger (30) siebte Nuten (65) angeordnet sind, die von fünften Nuten (33) einer ersten Deckplatte (32) hintergriffen werden und
dass am Adressträger (30) deckplattenseitig Federelemente (57) vorgesehen sind, die die erste Deckplatte (32) halten.

7. Tableau nach Anspruch 3,
dadurch gekennzeichnet,
dass am Element (27, 47) Laschen (56) angeordnet sind, die von sechsten Nuten (41) einer zweiten Deckplatte (39) hintergriffen werden und
dass am Element (27, 47) deckplattenseitig Federelemente (57) vorgesehen sind, die die zweite Deckplatte (39) halten.

8. Tableau nach den Ansprüchen 6 und 7,
dadurch gekennzeichnet,
dass das Federelement (57) eine durch eine Ausnehmung (74) gebildete Federzunge (72) aufweist, auf der deckplattenseitig eine Nocke (73) aufgesetzt ist.

9. Tableau nach einem der vorhergehenden Ansprüche,
dadurch gekennzeichnet,
dass das Element (27) profilfussseitig einen Schalterteil (42) aufweist, der mittels des Gelenksteges (43) mit dem Adressteil (44) verbunden ist, wobei der Schalterteil (42) zwischen Anschlag (46) und Elementfuss (45) auslenkbar ist.

10. Tableau nach Anspruch 8,
dadurch gekennzeichnet,
dass am Schalterteil (42) Gewindebolzen (37) angeordnet sind, an denen ein Diodenprint (34) befestigbar ist, wobei eine auf Leuchtdioden (35) aufsetzbare Diodenhaube (36) den Schalterteil 42) durchdringt und die Signale der Leuchtdioden (35) auf der zweiten Deckplatte (39) anzeigt.

11. Tableau nach Anspruch 8,
dadurch gekennzeichnet,
dass am Schalterteil (42) Printhalter (86) angeordnet sind, an denen der Diodenprint (34) schraubenlos befestigbar ist, wobei eine auf Leuchtdioden (35) aufsetzbare Diodenhaube (36) den Schalterteil (42) durchdringt und die Signale der Leuchtdioden (35) auf der zweiten Deckplatte (39) anzeigt.

12. Tableau nach Anspruch 2,
dadurch gekennzeichnet,
dass ein mit dem Profilfuss (5) verbindbarer Schaltprintträger (21) vorgesehen ist, an dem ein Schaltprint (24) mit dem Mikroschalter (26) angeordnet ist.

13. Tableau nach den Ansprüchen 1 und 3 bis 8,
dadurch gekennzeichnet,
dass das Element (47) einen Elementteil (48) aufweist, der fest mit dem Adressteil (44) verbunden ist, wobei Anschlag (46) und Elementfuss (45) den Schenkel (18) des Profilfusses (5) umfassen und
dass der Elementteil (48) eine Anzeige- und/oder Meldegeräte tragende Elementplatte (50) aufweist.

14. Tableau nach Anspruch 2,
dadurch gekennzeichnet,
dass das Tableau als Gehäuseprofil (2) einen Rahmen (90) mit einer ersten Fläche (19)', mit einen Kragen (92) aufweisenden Schenkeln (18'), mit einem Profilfuss (5') und mit einer Rahmenöffnung (91) aufweist, wobei ein Schaltprintträger (21) vom Kragen (92) gehalten wird und
dass das Tastenelement (27') einen Schalterteil (42'), Federelemente (57), eine dritte Öffnung (55) mit Gewindebolzen (37) oder Printhalter (86), zehnte Nuten (97), eine Schaltnocke (96), einen Elementfuss (45'), einen Anschlag (46'), einen Gelenksteg (43') und eine Befestigungslasche (93) aufweist, die mit der ersten Fläche (19') in Verbindung steht.

## Claims

1. Control panel, which is inclined towards the user, with command and/or reporting devices which are arranged in a housing and which serve as means for the input of commands and/or as means for information for the user of the lift, characterised in that a housing profile member (2) with a profile head (3) and a profile foot (5) is arranged in the housing (1), wherein the profile head (3) has a first surface (19) and the profile foot (5) has a limb (18) and that at least one element (27, 47), which is carried by the housing profile member (2) and which is connected at one end with the profile head (3) and held at the other end by the limb (18) of the profile foot (3), is provided.

2. Control panel, which is inclined towards the user, with command and/or reporting devices which are arranged in a housing and which serve as means for the input of commands and/or as means for information for the user of the lift, characterised in that the control panel has at least one element (27, 27'), which is arranged at one end at a first surface (19, 19') of a housing profile member (2, 90) and is held at the other end by the limb (18, 18') of a profile foot (5, 5') of the housing profile member (2, 90), with an articulation web (43, 43'), wherein on actuation of the element (27, 27') the pivoting out, at the profile side, of the element (27, 27') is transmitted to at least one microswitch (26).

3. Control panel according to claim 1 or 2, characterised in that the element (27, 47) has at the profile head side an address part (44) resting on the first surface (19) and at the profile foot side an element foot (45) and an abutment (46), which enclose the limb (18) of the profile foot (5).

4. Control panel according to claim 3, characterised in that an address carrier (30) can be plugged onto the address part (44), wherein limbs (60) of the address carrier (30) penetrate the address part (44) and detent with locks (31) arranged at the address part (44) at the back side.

5. Control panel according to claim 4, characterised in that the locks are rotatably arranged at studs (58) and are connected with a tension spring (80), wherein the unlocking of the limbs (60) is effected by means of a wedge-shaped unlocking plate (84) insertable between address part (44) and housing (1), wherein unlocking straps (85) pivot the locks (31) outwardly.

6. Control panel according to claims 4 and 5, characterised in that seventh grooves (65) are arranged at the address carrier (30) and are engaged behind by fifth grooves (33) of a first cover plate (32) and that spring elements (57), which hold the first cover plate (32), are provided at the address carrier (30) at the cover plate side.

7. Control panel according to claim 3, characterised in that straps (56) are arranged at the element (27, 47) and are engaged behind by sixth grooves (41) of a second cover plate (39) and that spring elements (57) are provided at the element (27, 47) at the cover plate side and hold the second cover plate (39).

8. Control panel according to claims 6 and 7, characterised in that the spring element (57) has a spring tongue (72) which is formed by a recess (74) and on which a dog (73) is placed at the cover plate side.

9. Control panel according to one of the preceding claims, characterised in that the element (27) has at the profile foot side a switch part (40) which is connected with the address part (44) by means of the articulation web (43), wherein the switch part (42) is pivotable out between abutment (46) and element foot (45).

10. Control panel according to claim 8, characterised in that threaded studs (37), to which a diode print (34) is fastenable, are arranged at the switch part (42), wherein a diode hood (36) placeable on luminescent diodes (35) penetrates the switch part (42) and displays the signals of the luminescent diodes (35) on the second cover plate (39).

11. Control panel according to claim 8, characterised in that print holders (86), to which the diode print (34) is fastenable in screw-free manner, are arranged at the switch part (42), wherein a diode hood (36) placeable on luminescent diodes (35) penetrates the switch part (42) and displays the signals of the luminescent diodes (35) on the second cover plate (39).

12. Control panel according to claim 2, characterised in that a switch print carrier (21), which is connectible with the profile foot (5) and at which a switch print (34) with the microswitch (26) is arranged, is provided.

13. Control panel according to claims 1 and 3 to 8, characterised in that the element (47) comprises an element part (48), which is firmly connected with the address part (44), wherein abutment (46) and element foot (45) embrace the limb (18) of the profile foot (5), and that the element part (48) comprises an element plate (50) carrying indicating and/or reporting devices.

14. Control panel according to claim 2, characterised in that the control panel comprises, as housing profile member (2), a frame (90) with a first surface (19'), with limbs (18') having a collar (92), with a profile foot (5) and with a frame opening (91), wherein a switch print carrier (21) is held by the collar (92), and that the pushbutton element (27') comprises a switch part (42'), spring elements (57), a third opening (55) with threaded spigots (37) or printer holders (86), tenth grooves (97), a switch dog (96), an element foot (45'), an abutment (46), an articulation web (43') and a fastening strap (93), which is connected with the first surface (19').

## Revendications

1. Panneau de commande incliné vers l'utilisateur, comportant des appareils de transmission d'ordres et/ou de signalisation qui sont disposés dans un boîtier et qui servent à l'utilisateur d'un ascenseur de moyens pour entrer des ordres et/ou de moyens d'information,
caractérisé en ce qu'un profilé de boîtier (2) comprenant une tête (3) et une base (5) est disposé dans le boîtier (1), la tête de profilé (3) comportant une première surface (19) tandis que la base de profilé (5) comporte une branche (18), et
en ce qu'il est prévu, porté par le profilé de boîtier (2), au moins un élément (27, 47) qui est relié, à une extrémité, à la tête de profilé (3) et qui est maintenu, à l'autre extrémité, par la branche (18) de la base de profilé (5).

2. Panneau de commande incliné vers l'utilisateur, comportant des appareils de transmission d'ordres et/ou de signalisation qui sont disposés dans un boîtier et qui servent à l'utilisateur d'un ascenseur de moyens pour entrer des ordres et/ou de moyens d'information,
caractérisé en ce que le panneau de commande comporte au moins un élément (27, 27') qui est disposé, à une extrémité, contre une première surface (19, 19') d'un profilé de boîtier (2, 90), qui est maintenu, à l'autre extrémité, par la branche (18, 18') d'une base de profilé (5, 5') du profilé de boîtier (2, 90) et qui a une patte d'articulation (43, 43'), étant précisé que lors de l'actionnement de l'élément (27, 27'), la déviation de l'élément (27, 27'), côté base de profilé, est transmise à au moins un microrupteur (26).

3. Panneau de commande selon la revendication 1 ou 2, caractérisé en ce que l'élément (27, 47) comporte, côté tête de profilé, un élément d'adresse (44) posé sur la première surface (19) et, côté base de profilé, une base d'élément (45) et une butée (46) qui entourent la branche (18) de la base de profilé (5).

4. Panneau de commande selon la revendication 3, caractérisé en ce qu'un support d'adresse (30) est apte à être enfiché sur l'élément d'adresse (44), les branches (60) du support d'adresse (30) traversant l'élément d'adresse (44) et s'enclenchant avec des verrous (31) disposés sur l'arrière de l'élément d'adresse (44).

5. Panneau de commande selon la revendication 4, caractérisé en ce que les verrous sont disposés pour pouvoir pivoter sur des tiges (58) et sont reliés à un ressort de traction (80), le verrouillage des branches (60) se faisant grâce à une tôle de déverrouillage cunéiforme (84) apte à être glissée entre l'élément d'adresse (44) et le boîtier (1), et des attaches de fixation (85) faisant pivoter les verrous (31) vers l'extérieur.

6. Panneau de commande selon les revendications 4 et 5, caractérisé en ce qu'il est prévu, sur le support d'adresse (30), des septièmes rainures (65) derrière lesquelles viennent en prise des cinquièmes rainures (33) d'une première plaque de recouvrement (32), et en ce qu'il est prévu, sur le support d'adresse (30), côté plaque de recouvrement, des éléments élastiques (57) qui maintiennent la première plaque de recouvrement (32).

7. Panneau de commande selon la revendication 3, caractérisé en ce qu'il est prévu, sur l'élément (27, 47), des attaches (56) derrière lesquelles des sixièmes rainures (41) d'une seconde plaque de recouvrement (39) viennent en prise, et en ce qu'il est prévu sur l'élément (27, 47), côté plaque de recouvrement, des éléments élastiques (57) qui maintiennent la seconde plaque de recouvrement (39).

8. Panneau de commande selon les revendications 6 et 7, caractérisé en ce que l'élément élastique (57) comporte une languette élastique (72) qui est définie par un creux (74) et sur laquelle est posée, côté plaque de recouvrement, une partie saillante élastique (73).

9. Panneau de commande selon l'une des revendications précédentes, caractérisé en ce que l'élément (27) comporte, côté base de profilé, un élément commutateur (42) qui est relié à l'élément d'adresse (44) à l'aide de la patte d'articulation (43), l'élément commutateur (42) étant apte à être dévié entre la butée (46) et la base d'élément (45).

10. Panneau de commande selon la revendication 8, caractérisé en ce qu'il est prévu, sur l'élément commutateur (42), des tiges filetées (37) auxquelles peut être fixée une carte à diodes (34), un capot de diodes (36) apte à être posé sur des diodes lumineuses (35) traversant l'élément commutateur (42) et affichant les signaux des diodes lumineuses (35) sur la seconde plaque de recouvrement (39).

11. Panneau de commande selon la revendication 8, caractérisé en ce qu'il est prévu, sur l'élément commutateur (42), des organes de retenue de carte (86) auxquels la carte à diodes (34) peut être fixée sans vis, un capot de diodes (36) apte à être posé sur les diodes lumineuses (35) traversant l'élément commutateur (42) et affichant les signaux des diodes lumineuses (35) sur la seconde plaque de recouvrement (39).

12. Panneau de commande selon la revendication 2, caractérisé en ce qu'il est prévu un support de carte imprimée (21) qui est apte à être relié à la base de profilé (5) et sur lequel est disposée une carte imprimée (24) avec le microrupteur (26).

13. Panneau de commande selon les revendications 1 et 3 à 8, caractérisé en ce que l'élément (47) comporte une partie d'élément (48) qui est solidaire de l'élément d'adresse (44), la butée (46) et la base d'élément (45) entourant la branche (18) de la base de profilé (5), et en ce que la partie d'élément (48) comporte une plaque d'élément (50) qui porte des appareils d'affichage et/ou de signalisation.

14. Panneau de commande selon la revendication 2, caractérisé en ce qu'il comporte, comme profilé de boîtier (2), un châssis (90) comprenant une première surface (19'), des branches (18') pourvues d'une collerette (92), une base de profilé (5') et une ouverture de châssis (91), un support de carte imprimée (21) étant maintenu par la collerette (92),
et en ce que l'élément formant touche (27') comprend un élément commutateur (42'), des éléments élastiques (57), une troisième ouverture (55) pourvue de tiges filetées (37) ou d'organes de retenue de carte (86), des dixièmes rainures (97), une came de contacteur (96), une base d'élément (45'), une butée (46'), une patte d'articulation (43') et une attache de fixation (93) qui est reliée à la première surface (19').
